Europäisches Patentamt

European Patent Office

Office européen des brevets

(19)

(11)  **EP 1 133 584 B1**

(12)  **EUROPEAN PATENT SPECIFICATION**

(45)  Date of publication and mention
of the grant of the patent:
**27.04.2005  Bulletin 2005/17**

(51)  Int Cl.[7]: **C23C 22/68**, C23C 22/02

(21)  Application number: **98960244.6**

(86)  International application number:
**PCT/US1998/024508**

(22)  Date of filing: **16.11.1998**

(87)  International publication number:
**WO 2000/029639 (25.05.2000 Gazette 2000/21)**

(54)  **DERIVATIZED METALLIC SURFACES, COMPOSITES OF FUNCTIONALIZED POLYMERS WITH SUCH METALLIC SURFACES AND PROCESSES FOR FORMATION THEREOF**

DERIVATISIERTE METALLISCHE OBERFLÄCHEN, KOMPOSITE FUNKTIONALISIERTER POLYMERE MIT SOLCHEN METALLISCHEN OBERFLÄCHEN UND VERFAHREN ZU DEREN HERSTELLUNG

SURFACES METALLIQUES DERIVATISEES, COMPOSITES DE POLYMERES FONCTIONNALISES DOTES DESDITES SURFACES METALLIQUES ET PROCEDE DE FORMATION DESDITES SURFACES

(84)  Designated Contracting States:
**DE FR GB IT**

(43)  Date of publication of application:
**19.09.2001  Bulletin 2001/38**

(73)  Proprietor: **E.I. DU PONT DE NEMOURS AND COMPANY**
**Wilmington, Delaware 19898 (US)**

(72)  Inventor: **VAN ALSTEN, John, Gregg**
**Wilmington, DE 19803 (US)**

(74)  Representative: **Carpmaels & Ransford**
**43 Bloomsbury Square**
**London WC1A 2RA (GB)**

(56)  References cited:
EP-A- 0 382 224           WO-A-87/01988
WO-A-98/29580           WO-A-98/48075
DE-A- 4 443 032         GB-A- 2 084 128
GB-A- 2 317 177           US-A- 3 770 514
US-A- 4 024 103           US-A- 4 777 091
US-A- 4 994 429           US-A- 5 059 258
US-A- 5 132 181           US-A- 5 547 761

• ALLARA D. L. : "Formation of crystalline monolayer of folded molecules by solution self-assembly of alpha-omega alkanedioic acids on silverl" JOURNAL OF THE AMERICAN CHEMICAL SOCIETY., vol. 113, no. 5, 1991, pages 1852-1854, XP002109863 AMERICAN CHEMICAL SOCIETY, WASHINGTON, DC., US ISSN: 0002-7863 cited in the application

EP 1 133 584 B1

## Description

This invention provides for metal surfaces which are derivatized when treated with $\alpha$-$\omega$ bis-functionalized substantially linear fluoroaliphatic, acids or salts thereof. These derivatized metal surfaces exhibit changes in surface properties. In particular, composites formed from polymers and metallic surfaces derivatized according to a process of the present invention exhibit surprising durability.

Wystrach (U.S. Patent 3,770,514) discloses the application of diphosphine oxide derivatives to a metal surface followed by application of a coating to the so-treated surface. The coatings disclosed are paints and adhesives. Wystrach further discloses that a metallic surface treated first with an inorganic chromate and then the diphosphine oxide derivative exhibits enhanced corrosion resistance over prior art treatments. Wystrach's diphosphine oxide derivatives encompass structures containing up to four-carbon chains between phosphine groups, and a number of pendant groups on the phosphorus including hydroxy and hydroxyalkyl, with methylene bis[bis(hydroxymethyl)phosphine oxide] as the preferred species.

Hwa (U.S. Patent 3,803,047 and U.S. Patent 3,808,048) discloses compositions consisting essentially of certain alkylene polyphosphonic acids and a water-soluble zinc salt, and compositions consisting essentially of alkylene polyphosphonic acids and certain azole compounds and/or a water-soluble zinc salt. Ethanol 1,1-diphosphonic acid is disclosed as a preferred polyphosphonic acid.

Dines et al. (WO 87/01988) disclose "multi-layer structures" wherein a polymer composite layer is secured to certain metallic or polymeric substrates. The polymer composite layer is composed of a polymer selected from certain groups of polymers, and a particulate, layered compound selected from the group consisting of $M(O_3ZO_xR)_n$ compounds, as defined therein, preferably $M(O_3PR)_2$ or $M(O_3POR)_2$. The particulate, layered compound may be tailored to be compatible with the polymer and provide adhesion between such polymer and the substrate. The particulate, layered compound may be composited on the surface of the polymer, or homogeneously dispersed throughout the polymer.

Detloff et al. (U.S. Patent 4,777,091) disclose the use of aminophosphonic acids, preferably multi-phosphonic acids, to prime surfaces of steel or galvanized metal, to take polyether resin-based coatings. The compositions taught are all relatively short-chain molecules, while long chain and branched molecules are disclosed. Detloff *et al.* are silent in regard to other types of coatings. Further, Detloff *et al.'s* teachings make no distinctions regarding chain lengths, degree of branching, or the desirability of $\alpha$-$\omega$ diacids.

Wieserman *et al.* (U.S. Patent 4,994,429) disclose the use of organic acid molecules, at least one end of which is a phosphorus-containing acid group, to form "active layers" on metal oxide/hydroxide particles to form active material. R groups linking the phosphorus-containing acid group to an unreacted group contain 1-30 carbon atoms. Uses of the active material disclosed include among others adsorbents and promoters for adhesive bonding, ceramics, and polymers. Wieserman is silent in regard to use of metals as substrates. Nothing is taught therein about any effects of chain length, and their examples are confined to relatively short chain lengths. There is no mention of neutralising the "active" free acid end to generate binding sites for acid polymers.

Allara *et al.* (J. Am. Chem. Soc. Vol. 113, No. 5, p. 1852, 1991) disclose the treatment of metallic surfaces using an $\alpha$-$\omega$ dicarboxylic acid having a carbon chain length of 30 carbons. The linear molecule is said to bend so that both ends of the chain contact the metallic surface, leaving the hydrocarbon backbone to impart a hydrophobic character to the surface so formed.

It is generally known in the art of forming self assembled monolayers of alkane thiols on gold that there is a transition from disordered to ordered molecular monolayers which occurs with increasing chain length (J. Am Chem. Soc., Vol. 109 (12) p. 3559, 1987). Yang *et al.* (J. Am. Chem. Soc., Vol. 115 (25), p. 11855, 1993) teach that the degree of order of the backbone chains in metal alkyl bis(phosphonate) solids increases with chain length approaching a maximum when the chain is at least 11 carbon units long. The relative degree of organisation is inferred from the location of $CH_2$ bond stretches in the infrared spectrum of the material, which is said to shift to lower wavenumber with increasing organisation. However, there is no teaching in that art to treat metallic surfaces to achieve improved adhesion of coatings, polymer films, or for improved corrosion resistance.

WO 98/29580 describes a process for treating metal surfaces comprising zinc, magnesium or aluminium or their alloys on which lacquers, plastic coatings, paints, sealants or adhesives are applied after the treatment. The metallic surfaces are treated at 10 to 100°C by dip coating, spray coating or roll coating with an aqueous solution. The solution has a pH of 2 to 13 and contains one or more compounds of the type XYZ at a concentration between 10-5 and 1 mole/l. Y is an organic group containing 20 to 50 carbon atoms and has a straight chain structure. X is a COOH-, $HSO_3$-, $HSO_4$-, $(OH)_2PO$-$(OH)_2PO_2$-, $(OH)(OR')PO$- or $(OH)(OR')PO_2$- group. Z is an OH-, SH-, $NH_2$-, NHR', CN-, $CH=CH_2$-, OCN-, epoxy, $CH_2=CR''$ -COO-, acrylamide, COOH-, $(OH)_2PO$-, $(OH)_2PO_2$-, $(OH)(OR')PO$- or $(OH)(OR')$ $PO_2$- group. R' is an alkyl group having 1 to 4 carbon atoms. R'' is an H atom or an alkyl group having 1 to 4 carbon atoms. Groups X and Z are each bonded to group Y at its terminal position. No fluoroaliphatic chains are disclosed.

Huey C. Yang *et al.* in "Growth and Characterisation of Metal (II) Alkanebisphosphonate Multilayer Thin Films on Gold Surfaces", J. Am. Chem. Soc. 1993, 115, 11855-11862, describe thin films of divalent metal (Zn and Cu) alkanebisphosphonates that grow on gold surfaces modified with (4-mercaptobutyl)phosphonic acid by alternate immersion in 5 mM ethanolic solutions of the metal acetate or perchlorate salt and $H_2O_3P(H_2)n\ PO_3H_2$, n = 8, 10, 12 and 14. No fluoroaliphatic chains are disclosed.

## SUMMARY OF THE INVENTION

The present invention provides a process for producing a derivatized metal surface, comprising: contacting a metal surface with an α-ω difunctional substantially linear fluoroaliphatic acid, or a salt thereof represented by the formula

$$\alpha\text{-R-}\omega$$

wherein
α is a functional group selected from the group consisting of radicals of oxyacids of phosphorous, carbon and salts of a counterion or cation thereof;
ω is a functional group selected, independently of α, from the group consisting of radicals of oxyacids of phosphorous, carbon and salts of a counterion or cation thereof; primary, secondary, tertiary or quaternary amines and the salts thereof; phenol; oxamic acid; amino acid; and carbon and sulfur zwitterion; and
R is an α-ω bidentate substantially unbranched fluoroaliphatic organic radical having 8 to less than 30 carbons in a linear chain between the radical ends wherein less than 50% of the carbon atoms in the chain are replaced by oxygen, nitrogen, or sulfur, to produce a first derivatized metal surface.
The present invention further provides a layered structure comprising: a first layer comprising a substrate having a surface, said substrate comprising a metal and a plurality of cations thereof on the surface; and a second layer comprising an α-ω difunctional substantially linear fluoroaliphatic bidentate radical having 8 to less than 30 carbons in a linear chain between the radical ends wherein less than 50% of the carbon atoms in the chain are replaced by oxygen, nitrogen or sulfur, the radical having a first end and a second end, said first end being bonded to an anion of an oxyacid, said anion being ionically bonded to the metal cations on the surface of said substrate, and said second end being bonded to a functional group selected from the group consisting of radicals of oxyacids of phosphorous, carbon and salts of a counterion or cation thereof; primary, secondary, tertiary or quaternary amines and salts thereof; phenol; oxamic acid; amino acid; and carbon and sulfur zwitterion.
The present invention further provides a composition comprising an α-ω difunctional substantially linear aliphatic or fluoroaliphatic acid, or a salt thereof, having at least 8 atomic linkages in the aliphatic or fluoroaliphatic chain, and a polymer having a functional group associated with said acid or salt thereof.

## BRIEF DESCRIPTION OF THE DRAWINGS

FIG. 1 shows a derivatization of a metal surface with a representative α-ω difunctional substantially linear aliphatic acid. Aliphatic acids are outside the scope of the invention. Also figures 2, 3 and 4 are outside the scope of the invention.
FIG. 2 shows a further derivatization of a metal surface with a representative multivalent metallic salt.
FIG. 3 shows contacting a representative polymer having a functional group with the derivatized surface of FIG. 2.
FIG. 4 shows contacting a representative non-polymeric organic species having a functional group with the derivatized surface of FIG. 2.

## DETAILED DESCRIPTION

The present invention provides a metallic surface having a particular desired functionality imparted thereto, such as catalytic activity, low or high surface energy, selective reactivity, corrosion resistance, or the like.
In a process of the present invention, a first derivatized metal surface is formed by contacting a metal surface with an α-ω difunctional substantially linear fluoroaliphatic acid, or a salt thereof, represented by the formula α-R-ω, the metal surface being reactive with the acid or salt moiety, said acid or salt moiety being the α functional group of said α-ω difunctional species. Depending upon the chemical identity of the ω functionality of said α-ω difunctional species, the first derivatized metal surface is receptive via complexation to other molecules having a functional group, such as amine end groups on polyamides, organic and inorganic metal salts, ion-containing polymers (known as ionomers), or acids such as the pendant acid groups of polymethacrylic acid. Thus, through contact with these other functional molecules, the first derivatized metal surface can be further derivatized. The first derivatized metallic surface can be further contacted with one functional molecule, or for certain embodiments herein the first derivatized metal surface is further contacted with more than one functional molecule. The functional molecule is described herein as having a functional group "associative" or "associated" with the first or second derivatized metal surface. By "associative" or "associated" is meant that the functional molecule via its functional group is capable of complexing with the derivatized surface. This can take the form of an ionic bond or a hydrogen bond or any other form of association or complexing known to those of skill in the art.

In a further embodiment of the present invention, a second derivatized metal surface is formed by contacting the first derivatized metal surface, wherein the $\alpha$-$\omega$ difunctional substantially linear fluoroaliphatic acid or salt thereof is preferably a bis-oxyacid of phosphorus or a univalent salt thereof, with a solution comprising a multivalent metal salt thereby forming an ionic complex on the metal surface. The metal of the salt is selected from the group consisting of alkaline earth metals, transition metals, metals from groups IVA, VA, VIA of the periodic table, and complex ions and is in solution with the solvent which is a liquid or liquid mixture having a pKa value higher than that of the $\alpha$-$\omega$ difunctional substantially linear fluoroaliphatic acid or salt thereof. The metal of the metal surface is selected from iron, chromium, aluminium, copper, nickel, zinc titanium, tin, tantalum, steel, stainless steel, brass, inconel and phosphated metals. Like the first derivatized metal surface, the second derivatized metal surface, too, is receptive via complexation to a variety of other functional molecules particularly acids. For both the first and second derivatized metal surfaces, it is the $\alpha$ end of the $\alpha$-$\omega$ species that forms an anion group ionically bound to cations formed from the metal surface, while the $\omega$ end exhibits the receptivity to association with certain other functional molecules.

In yet a further embodiment of the present invention, a third derivatized metal surface is formed by contacting either the first or second derivatized metal surface with a liquid comprising a polymer having a functional group associative with the free end of the anion of the first or second derivatized metal surface, to form a novel layered structure comprising the reaction product of the first or second derivatized metal surface of a metal substrate and the polymer having a functional group associative with the first or second derivatized metal surface. The polymer is selected from a polymer having oxyacid functionality or a salt thereof, a polymer having amine functionality, a polymer having anhydride functionality and a polyimide. A representative example of a polymer having a functional group suitable for use in forming the third derivatized metal surface is a carboxylic acid functionalized copolymer of tetrafluoroethylene and hexafluoropropylene.

In an alternative embodiment of the present invention, a fourth derivatized metal surface is formed by contacting either the first or second derivatized metal surface with a non-polymeric molecular species having a functional group associative with the first or second derivatized metal surface, to form a novel layered structure comprising the reaction product of the first or second derivatized metal surface of a metal substrate with the non-polymeric molecular species. The non-polymeric molecular species is selected from a non-polymeric molecular species having oxyacid functionality or salt thereof, a non-polymeric molecular species having amine functionality, and a non-polymeric molecular species having phenolic functionality. Representative examples of non-polymeric functionalized molecular species suitable for use in forming the fourth derivatized metal surface are octadecylphosphonic acid, perfluorooctanoic acid, and Zonyl® -UR fluorinated surfactant, a registered trademark and available from E. I. Du Pont de Nemours and Company (DuPont), Wilmington DE.

The $\alpha$-$\omega$ difunctional substantially linear fluoroaliphatic acids or salts thereof used in the processes of the present invention are represented by the formula:

$$\alpha\text{-R-}\omega$$

wherein:

$\alpha$ is a functional group selected from the group consisting of: radicals of oxyacids of phosphorous, carbon, and salts of a counterion (or cation) thereof;

$\omega$ is a functional group selected, independently of $\alpha$, from the group consisting of: radicals of oxyacids of phosphorous, carbon, and salts of a counterion (or cation) thereof; primary, secondary, tertiary or quaternary amines and the salts thereof; phenol; oxamic acid; amino acid; and carbon and sulfur zwitterion; and

R is an $\alpha$-$\omega$ bidentate substantially unbranched fluoroaliphatic organic radical having 8 to less than 30 carbons, preferably at least 10 carbons, in a linear chain between radical ends wherein less than 50%, preferably less than 25%, most preferably less than 10%, of the carbon atoms in the chain are replaced by oxygen, nitrogen, or sulfur. One or more hydrogens of an aliphatic organic radical are replaced by a fluorine. R can be a perfluorinated organic radical.

Preferably univalent salts of the α-ω difunctional substantially linear fluoroaliphatic acids are used.

Preferably ω is a radical or an oxyacid of phosphorous, carbon or a salt thereof. More preferably α and ω are the same radical of an oxyacid of phosphorous or a salt thereof. Representative examples of oxyacids of phosphorous are phosphonic acids, such as Q-P(=O)(-OH)$_2$ and (Q-)(TO-)P(=O)(-OH)); phosphinic acids, such as (Q-)(Q-)P(=O)(-OH)); and phosphates, such as T-O-P(=O)(-OH)$_2$) wherein each Q is independently selected from the group consisting of: H, halogen, alkyl and aryl, and each T independently selected from the group consisting of: alkyl or aryl. Most preferably, α and ω are a radical of an α-ω bisphosphonic acid or a univalent salt thereof.

The fluoroaliphatic organic radical, R, is preferably an unbranched fluorocarbon chain. The chain length suitable for the practice of the present invention ranges from 8 to fewer than 30 carbon (or carbon replacement) atoms. The most preferred chain lengths are from 10-18 carbon atoms.

Preferred fluoroaliphatic acids are perfluorinated dicarboxylic acids, and fluorinated phosphonic or phosphinic acids or fluorinated phosphates in which a substantially fluorinated group or perfluorinated group of the phosphonic acid, phosphinic acid or phosphate is bonded on both ends to a -(CH$_2$)- or -(CH$_2$CH$_2$)-group, i.e., these -(CH$_2$)- or -(CH$_2$CH$_2$)- groups are adjacent to the terminal α-ω functional groups. Certain fluoroaliphatic acids are commercially available Others can be prepared as shown in the example section below. Most preferred fluoroaliphatic acids are (CF$_2$)$_n$-((CH$_2$)$_m$OP(O)(OH)$_2$)$_2$ wherein n is 6-10 and m is 1 or 2.

It is found that the metallic surfaces treated with certain aliphatic acids or salts thereof degrade by 77% after 30 minutes in air at a temperature of 250°C. The metallic surfaces treated with certain fluoroaliphatic acids or salts thereof were found to degrade by only 6% under identical conditions. The rate of degradation for the fluorinated aliphatic monolayer was found to be lower at 350°C than that of the fully hydrogenated aliphatic monolayer at 250°C. For example, the first order rate constant for thermal degradation of a metal surface treated with 1,12-dodecyl bisphosphonic acid (DBPA) was found to be 0.103 min$^{-1}$ at 250°C, while for a surface treated with H$_2$O$_3$POCH$_2$(CF$_2$)$_{10}$CHOPO$_3$H$_2$ the rate was 0.019 min$^{-1}$ at 350°C.

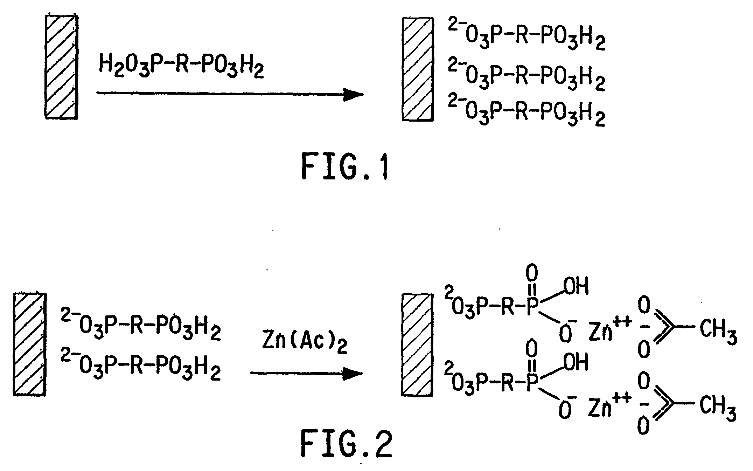

While in no way limiting the scope of the invention, the following theoretical description provides a useful framework for understanding the underlying principles which govern the invention hereindescribed. It is believed that the underlying cause of the surprising improvements offered by the practice of the present invention, and as hereinbelow exemplified, is the formation of so-called self-assembled molecular monolayers on the base metal surface by the α-ω difunctional substantially linear fluoroaliphatic acid or salt thereof suitable for the process of the present invention, wherein an acidic or ionic group at one end (a first end) of the fluoroaliphatic acid or salt thereof ionically bonds the acid or salt to cations of the metal surface. By "self-assembled monolayers" is meant assemblies of molecules bound to the surface of a substrate that are precisely one molecule thick and are formed spontaneously by contacting the substrate with a liquid comprising the assembling molecule. It is further believed that the self-assembled molecular monolayer so formed have the morphology indicated in FIG. 1, wherein the substantially linear molecules are aligned in the manner shown, thereby forming a new surface with the character imparted by the functional group on the free (or a second) end of the molecule, in the case of FIG. 1, an acid. It is believed that the desirable features of the present invention derive from the high density of functional groups, and the high degree of crystallinity which is obtained upon the creation of the self-assembled monolayer.

Metal surfaces suitable for the practice of the present invention are materials which exhibit chemical reactivity with at least one of the functional groups α or ω hereinabove described. Suitable metal substrates having a metal surface useful in the processes and layered structures of the present invention include iron, chromium, aluminum, copper, nickel, zinc, titanium, tin, tantalum, and alloys thereof such as steel, stainless steel, brass, inconel, and phosphated metals. Preferred for the practice of the present invention are steel, phosphated steel, galvanized steel, stainless steel, aluminum, brass, tantalum and copper.

Using infrared analytical techniques known in the art (Yang et al., J. Am. Chem. Soc. Vol. 115 (25) p. 11855, 1993.), it is found that repeated application of the process of the present invention employed for the formation of the first derivatized metal surface and hereinbelow described, results in the formation of multiple molecular monolayer structures. It has been found in the practice of the present invention that when copper-containing metals are contacted according to the process of the invention multiple monolayers form spontaneously during a single exposure. By "multiple monolayers" are meant materials comprising alternating layers of the α-ω bisfunctional organic molecule and the coordinating metal cation used to prepare the second derivatized metal surface, in which the number of α-ω bisfunctional organic molecule layers is greater than one.

Although the number of molecule layers is greater than one, it is believe that together all of the alternating layers of the α-ω compound and the coordinating metal cation are one molecule.

In a preferred embodiment of the process of the present invention, the first derivatized metal surface is formed by contacting a metal substrate having a metal surface with a solution comprising an α-ω difunctional substantially linear fluoroaliphatic acid, or a salt thereof, having 8 to less than 30 carbon atoms in the fluoroaliphatic chain, preferably an α-ω bis-oxyacid of phosphorus or a univalent salt thereof, most preferably an α-ω bis phosphonic acid or a univalent salt thereof, followed by rinsing of the thus contacted surface with the acid-free solvent. Suitable contacting time depends upon the concentration of acid in the solvent, the nature of the solvent, the temperature, and the receptivity of the metal. For example, it has been found in the practice of the present invention that satisfactory results are achieved by contacting a stainless steel surface with a 1 millimolar solution of the acid, 1, 12 dodecyl bisphosphonic acid, in ethanol for 15 minutes at room temperature.

It is further found in the practice of the present invention for the formation of the first derivatized metal surface that the un-neutralized oxyacids of phosphorous, preferred for the practice of the invention, are essentially insoluble in water. Ethanol is a preferred solvent for the practice of the invention. Most preferred are 0.1-1.0 mM solutions of 1,10 decyl bis-phosphonic acid or 1,12 dodecyl bis-phosphonic acid in a one-half acid equivalent solution of a monovalent hydroxide, preferably sodium hydroxide or ammonium hydroxide in water. It is found that undesired precipitation results if a multivalent ion is employed during preparation the first derivatized metal surface, and for that reason, univalent ions are highly preferred for the practice of the invention.

In a particularly preferred embodiment of the invention, the first derivatized metal surface is formed using an $\alpha$-$\omega$ bisphosphonic acid, or a univalent salt thereof, followed by formation of the second derivatized metal surface by subsequent contacting of the first derivatized metal surface with a solution of a multivalent metal salt, whereby a multivalent metal phosphonate layer is formed on the metal surface rendering a surface with exceptional receptivity to acid-containing molecules. It has been found in the practice of the present invention that the first derivatized metal surface formed according to the preferred embodiment of the process of the invention when further contacted with a 1mM aqueous solution of zinc acetate can be made to exhibit the desired improvement in surface receptivity to acid-containing molecules. The metal of the salt are ions of alkaline earth and transition metals, as well as metals from groups IVA, VA, VIA, of the periodic table. Also included are complex ions with oxidation state of +2 or greater which form solutions with solvents suitable for the practice of the invention such as $VO^{+2}$. Preferably, the ions are multivalent and are soluble in water or ethanol. Most preferable are Zr, Zn, Pb, Al, Cr, Fe, Ni, Co, V, Sn, Os, Ce, Y, Yb, La, Mn, Mg, Cu, and Ca.

Solvents suitable used are liquids or liquid mixtures having pKa values higher than that of the $\alpha$-$\omega$ difunctional substantially linear acid or salt thereof (the monolayer forming solute). Suitable solvents for certain of the monolayer forming solutes can include acetic acid, tetrahydrofuran, alcohols, such as methanol, ethanol, and propanol, aliphatic hydrocarbons, ethers, esters, perhydrogenated carboxylic acids, aromatic liquids, dimethyl sulfoxide and neutralized solutions in water. Preferred solvents for bisphosphonic acids are aqueous solutions of monovalent hydroxides and alcohols.

Solvents for these fluorinated materials can also be perfluorinated liquids such as perfluorinated tetrahydrofuran.

Most preferred for the process of forming the second derivatized metal surface of this invention are 1 mM solutions of zinc acetate in water or ethanol; metal nitrates such as aluminum nitrate, chromium (III) nitrate, cerium (III) nitrate and water; and lead (II) acetate and water.

There are no particular limitations in principle to the temperature at which the metallic surface is treated according to the process of the invention. In general, warmer temperatures are preferred for the formation of the first derivatized metal surface according to the preferred embodiment of the process of the invention. The maximum temperature at which the derivatized surfaces of the invention may be produced is largely determined by the liquids employed. As a general rule, the contacting temperature should be below the boiling point or the decomposition temperature of the liquid, whichever is lower. Thus, when water or ethanol are employed, it is preferred that the contacting temperature be in the range of about 20-100°C. When a polymer melt is employed, as in the formation of the third derivatized metal surface of the invention, the contacting temperature is in the range of about 5-300°C. Solvents having boiling points well above those of ethanol or water will also be suitable for the practice of the process of the present invention at temperatures below their boiling points.

While temperatures above room temperature are preferred for forming the first derivatized surface of the invention, the process for forming the second, third and fourth derivatized surfaces of the invention may at times be performed at room temperature.

The present invention further provides a layered structure comprising a first layer comprising a substrate having a surface, said substrate comprising a metal and a plurality of cations thereof on the surface; and a second layer comprising an $\alpha$-$\omega$ difunctional substantially linear fluoroaliphatic bidentate radical having 8 to less than 30 carbons in the fluoroaliphatic chain, the radical having a first end and a second end, said first end being bonded to an anion of an oxy-acid, said anion being ionically bonded to the metal cations on the surface of said substrate, and said second end being bonded to a functional group. The $\alpha$-$\omega$ difunctional substantially linear fluoroaliphatic bidentate radical is as described above for "R", the anion of an oxy-acid is derived from "$\alpha$" as described above, and the functional group can be as described for "$\omega$" above.

The layered structure can further comprise derivatives of functional molecules bonded to said functional group or to a derivative of said functional group. Preferred derivatives of functional molecules are obtained from molecules such as multivalent metal salts, wherein the second layer is a cation of a bis-oxyacid of phosphorus or a salt thereof;

and organic species, such as polymers and non-polymeric molecular species, which organic species are associated with said functional group, with a derivative of said functional group, or with a derivative of a combination of said functional group (or a derivative of said functional group) with the multivalent metal salt derivative. Representative ionic derivatives can be obtained from organic acids to form a third derivatized metal surface or a polymeric layered structure comprising such third derivatized metal surfaces. The reacting organic molecule can be small, such as can be used to form a fourth derivatized metal surface or a non-polymeric layered structure comprising such a fourth derivatized metal surface; or macromolecular, such as can be used to form the third derivatized metal surface or a polymeric layered structure comprising such a third derivatized metal surface; mono or polyacidic; or multifunctional in nature.

In an especially preferred embodiment of the invention, polymers are bonded to the metal surface by the intermediary action of the $\alpha$-$\omega$ difunctional substantially linear fluoroaliphatic acid or salt thereof of the present invention, to form the third derivatized metal surface or a layered structure comprising same. The polymer thus becomes a third layer. The polymers suitable for the practice of the invention are those which incorporate a functional group which can associate with the functional group residing on the free end (or second end) of the complex ionically bonded to metal cations of the metal surface of the first or second derivatized metal surface. Suitable for the practice of the invention are polymers and copolymers having oxyacid functionality, especially oxyacids of phosphorous, sulfur, and carbon, either in the backbone or in side groups, and their ionomers, including the homo- and co-polymers of acrylic acids and their ionomers, the homo and co-polymers of styrene sulfonate and their ionomers, the homo- and co-polymers of vinyl phosphonic acid and their ionomers, the homo- and co-polymers of vinyl sulfonic acid and their ionomers, the homo- and co-polymers of amic acids and their ionomers, and polymers having phosphorous, sulfur, or carbon oxyacid acid end groups (telechelics), either as free acid or in neutralized form (telechelic ionomers), including the telechleic homo- and co-polymers of: tetrafluoroethylene, styrenes, butadiene, and ethylene-propylene-diene rubbers. Other suitable polymers or co-polymers are those having an amine (primary, secondary, tertiary, and the salts of said amines) or anhydride functionality incorporated either in the polymer backbone, as a side group, or an end group. Polyimides can also be used as the polymer.

Preferred are polymers having oxyacid acid or anhydride functionality and polyimides.

The polymer-derivatized metal surface of the present invention, e.g. the third derivatized metal surface, (or the layered structure containing same,) can be formed by contacting the first derivatized metal surface, or the second derivatized metal surface wherein the $\alpha$-$\omega$ difunctional compound used in forming the second derivatized metal surface is a bis-oxyacid or a salt thereof, (or layered structures containing same), with a liquid comprising a polymer, such as a solution, a dispersion, or a melt comprising the polymer, or a solid comprising the polymer in which the polymer subsequently undergoes at least partial melting. In one preferred embodiment, a solution comprising the polymer is applied to the first or second derivatized metal surface and subsequently dried at a temperature above the glass transition temperature of the polymer. In another preferred embodiment, the polymer is applied to the first or second derivatized metal surface as a melt. A preferred third derivatized metal surface (or layered structure comprising same) is a derivatized tantalum surface wherein the polymer is a polyimide.

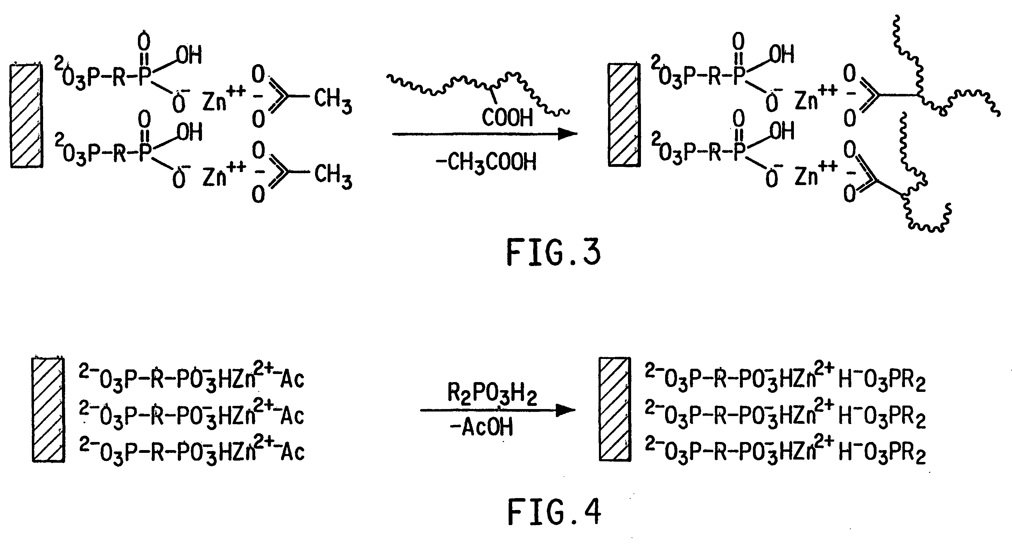

In a further embodiment of the present invention small molecules with ion-forming functional groups are immobilized on surfaces forming the structure of the fourth derivatized metal surface hereinabove described or layered structures comprising same. For layered structures further comprising ionic derivatives of non-polymeric molecular species, the ionic derivative combines with the functional groups are immobilized on surfaces forming the structure of the fourth derivatized metal surface hereinabove described or layered structures comprising same. For layered structures further comprising ionic derivatives of non-polymeric molecular species, the ionic derivative combines with the functional group ionically bonded to the $\alpha$-$\omega$ compound or combines with the multivalent salt derivative of a second derivatized metal surface to become part of the second layer (see FIG. 4). Small molecules suitable for forming the fourth derivatized metal surface or layered structures comprising same of the present invention include molecules containing oxyacid functionality, especially oxyacids of phosphorous, sulfur, and carbon, either as the free acid or a neutralized salt, including oxamic acids, zwitterions, and amino acids, molecules containing amine fimctionality, either as the free amine or ammonium salt, and molecules containing phenolic functionality, either as the free acid or salt.

Preferred are molecules containing oxyacid functionality, especially oxyacids of phosphorous, sulfur, and carbon, either as the free acid or a neutralized salt, including oxamic acids, zwitterions, and amino acids.

In an alternative embodiment of the invention, wherein it is desired to apply a durable coating of a polymeric material onto a surface of a metal substrate, the benefits derived from the practice of the present invention can be realized by contacting, either prior to or simultaneously with a coating operation, the $\alpha$-$\omega$ difunctional species suitable for the practice of the invention with the polymer to be coated onto the surface of the metal. Contacting can be accomplished by methods known in the art, including dissolution in a solvent, melt compounding, or dispersion in a liquid medium to form a mixture. When employing this alternative embodiment of the invention, moiety $\alpha$ of the $\alpha$-$\omega$ difunctional species suitable for the practice of the invention must be a stronger acid than the polymer with which it is contacted.

The first derivatized surface of the present invention provides a selective improvement in the adhereability of organic species to metal surfaces over that achieved with the metal surfaces alone, the selectivity being determined by the functional group of the free end of the α-ω difunctional species of the invention. The second derivatized surface of the invention provides particularly high receptivity to the surface towards acid-containing species. The third derivatized surface of the invention provides surprising durability. The fourth derivatized surface of the invention provides durable modification of the surface energy and reactivity of metal substrates.

EXAMPLES

In the descriptions of the following examples, the underlying terms will be defined as follows:

"stainless steel coupons" means a piece of type 304 stainless steel of nominal dimensions 1" x 1" x 1/16" (2.54 cm x 2.54 cm x 0.15 cm)
"Nochromix® cleaned" means a dip in a solution of Nochromix® (Godax Laboratories) glass cleaning powder dissolved in sulfuric acid for not less than one minute, followed by a rinse with distilled water
"DBPA" means 1, 12 dodecyl bisphosphonic acid
"F-DBPA" means 1H, 1H, 12H, 12H-perfluoro-1, 12 dodecanediphosphate
"IR" means infrared spectroscopy, performed with p-polarized radiation at grazing incidence (86°) to the sample. Quantitative and qualitative information regarding mass coverage and reactions of the organometallic layers are obtained by measurements of characteristic absorption bands, as described in Yang et al, *J. Am. Chem. Soc.* 1993, 115, 11855.
"Film formation measured (or confirmed) by IR" means that the presence of the self-assembled layer was confirmed by measurements of characteristic infrared absorption bands. Unless otherwise stated, these bands are the C-H stretching bands found at 2927 and 2852 $cm^{-1}$, and the P-O bands found between 1200-900 $cm^{-1}$.
"ESCA" means Electron Spectroscopy for Chemical Analysis. Surface analysis by ESCA is accomplished by irradiating a sample with monoenergetic soft x-rays and analyzing the energy of the detected electrons. In this case Mg k-alpha x-rays were used. These Photons have limited penetrating power in a solid on the order of 1-10 micrometers. They interact with the atoms in the surface region, causing electrons to be emitted by the photoelectric effect. Typically the electrons emitted are from approximately the top most 100 angstroms. The emitted electrons have measurable kinetic energies from which binding energies can be calculated. Binding energies (B.E.) may be regarded as the energy difference between the initial and final states after the photelectron has left the atom. Variations in the elemental B.E.'s can be used to identify the chemical state of materials being analyzed.

The instrument used was a VG SCIENTIFIC ESCALAB MK II.
Survey spectra (low resolution, maximum signal) were initially run for each sample to identify the elements present. The conditions for these runs were 300 watts x-rays power, 200 electron volts pass energy (eV, P.E.) and a step size of .75 eV for each acquired point. Detail spectra (high resolution) were run for each element detected in the survey (same x-ray power, 20 eV P.E., and .2 eV step size). The detail spectra are used for quantitation and chemical state identification. Charge corrections to the elemental B.E.'s were done by assuming the lowest B.E. carbon species to be hydrocarbon (C-C bonding). The analysis area was ~ 2 mm x 5 mm.
"APA-II" designates a room temperature soluble copolymer of tetrafluoroethylene (80.7%) and hexafluoropropylene (19.3%), with carboxylic acid end groups synthesized as described in U.S. Patent 5,547,761 and having a melt viscosity of 1200 Pa s (measured at 372°C, 4.48 x $10^4$ Pa shear stress in a melt indexer). For further details on the properties of soluble fluoropolymers, see U.S. Patent 5,547,761.
Panels of aluminum were 4" x 12" x 0.025" (10.16 cm x 30.48 cm x 0.064 cm). They were obtained from ACT Laboratories, Hillsdale, MI. The aluminum was Code APR10324, batch # 30907514. All panels were cleaned with a methylene chloride rinse prior to treatment.

EXAMPLES 1-6 AND COMPARATIVES EXAMPLES 1-4

In the following examples, composite structures were formed of aluminum panels as hereinabove described; fluorinated α-ω bisphosphates of the formula $H_2O_3P\text{-}O\text{-}CH_2\text{-}(CF_2)_n\text{-}CH_2\text{-}O\text{-}PO_3H_2$, wherein n = 2, 6, 10 (as prepared below), and DBPA; and APAII copolymer film, as hereinabove described, available from DuPont. The composites so formed were subject to the corrosive exposures as hereinbelow described, and the durability of the composite was evaluated.
The fluorinated α-ω bisphosphates were prepared as follows:

Preparation of $(CF_2)_6\text{-}(CH_2OP(O)(OH)_2)_2$

$$(CF_2)_6\text{-}(CH_2OH)_2 + POCl_3/\text{cat. } CaCl_2 \text{ -----> } (CF_2)_6\text{-}(CH_2OP(O)Cl_2)_2$$

$$(CF_2)_6\text{-}(CH_2OP(O)Cl_2)_2 + H_2O \text{ ----- > } (CF_2)_6\text{-}(CH_2OP(O)(OH)_2)_2$$

A mixture of dodecafluorohexane-1,12-diol (10.86 g, 0.03 mol), phosphorus oxychloride (77 g, 0.5 mol) and calcium chloride (1.2 g, 0.0108 mol) was stirred vigorously at 100-110°C for overnight. After cooling, the product mixture was filtered to remove any salt residue. The excess phosphorus oxychloride was distilled off at ~36°C/50 mmHg. After high vacuum treatment (80°C/2 hrs), the cooled product was washed with ether and dried to give the desired bis-(phosphorodichloridate) as a white solid, mp. 59-60°C, yield 17.5 g (98%). $^1$H NMR (300 MHz, CDCl$_3$): δ4.72 (q, J = 12 Hz); $^{19}$F NMR (188.24 MHz, CDCl$_3$):-120.3 (m, 4F), 122.4 (m, br, 4F), -123.4 (m, br, 4F).

The bis-(phosphorodichloridate) product obtained from the above experiment (17.4 g, 0.029 mol) was dissolved in tetrahydrofuran (THF, 25 mL), then water (3.1 g, 0.172 mol) was added slowly. After addition was complete, the mixture was heated at reflux for 3 hrs. The THF solvent was removed in vacuo and the residue was dried at 100°C under high vacuum. After cooling, ether was added to extract the product. The bottom organic layer was separated and the ether was removed in vacuo. The solid residue was dried to give the bis-(phosphoric acid) product as a white solid, mp. 200°C (decomp.), yield 10.3 g (67.6%). $^1$H NMR (300 MHz, CDCl$_3$): δ4.44 (m, 4H), 10.6 (s, br, 4H); $^{19}$F NMR (188.24 MHz, CDCl$_3$):-118.3 (s, 4F), -119.6 (s, 4F), -120.7 (s, 4F).

Preparation of $(CF_2)_2\text{-}(CH_2OP(O)(OH)_2)_2$

$$(CF_2)_2\text{-}(CH_2OH)_2 + POCl_3/\text{cat. } CaCl_2 \text{ -----> } (CF_2)_2\text{-}(CH_2OP(O)Cl_2)_2$$

$$(CF_2)_2\text{-}(CH_2OP(O)Cl_2)_2 + H_2O \text{ -----> } (CF_2)_2\text{-}(CH_2OP(O)(OH)_2)_2$$

The bis-(phosphorodichloridate) $(CF_2)_2\text{-}(CH_2OP(O)Cl_2)_2$ was prepared from tetrafluoro-1,4-butanediol by the same procedure described in the above preparation. This product was a white solid, mp. 61-65°C. $^1$H NMR (300 MHz, CDCl$_3$): δ4.48 (m, 4H), 10.6 (s, br, 4H); $^{19}$F NMR (188.24 MHz, CDCl$_3$):-127.7 (dm, J = 48.5 Hz).

The bis-(phosphoric acid) product $(CF_2)_2\text{-}(CH_2OP(O)(OH)_2)_2$ was prepared from $(CF_2)_2\text{-}(CH_2OP(O)Cl_2)_2$ by the procedure described above. The product was a white powdered solid, mp. 160-168°C. $^1$H NMR (300 MHz, CDCl$_3$): δ4.16 (m); $^{19}$F NMR (188.24 MHz, CDCl$_3$): -125.5 (m).

Preparation of $(CF_2)_{10}\text{-}(CH_2OP(O)(OH)_2)_2$

$$(CF_2)_{10}\text{-}(CH_2OH)_2 + POCl_3/\text{cat. } CaCl_2 \text{ -----> } (CF_2)_{10}\text{-}(CH_2OP(O)Cl_2)_2$$

$$(CF_2)_{10}\text{-}(CH_2OP(O)Cl_2)_2 + H_2O \text{ -----> } (CF_2)_{10}\text{-}(CH_2OP(O)(OH)_2)_2$$

A mixture of eicosafluorododecane-1,12-diol (26.5 g, 0.047 mol), phosphorus oxychloride (120 g, 0.78 mol) and calcium chloride (1.7 g, 0.015 mol) was stirred vigorously at 100-110°C for overnight. After cooling the product mixture was solidified. This mixture was warmed slightly and the solid was melted into a liquid, which was filtered to remove any residual salt. The excess phosphorus oxychloride was distilled off at ~36°C/50 mmHg. The product bis-(phosphorodichloridate) was obtained as a white solid after vacuum drying, mp. 111-113°C, yield 34.g (90: 6%). $^1$H NMR (300 MHz, CDCl$_3$): δ4.73 (m); $^{19}$F NMR (188.24 MHz, CDCl$_3$): -120.3 (br, 4F), -122.2 (s, br, 12F), -123.3 (s, br, 4F).

The bis-(phosphorodichloridate) product obtained from the above experiment (34 g, 0.0427 mol) was dissolved in tetrahydrofuran (THF, 50 mL) at 50°C, then water (3.08 g, 0.171 mol) was added slowly while keeping the pot temperature at ~50 to 60°C. After addition the mixture was heated at reflux for 3 hrs. The THF solvent was removed under vacuum and the residual solid was dried at 60°C under high vacuum to give the bis-(phosphoric acid) product as a white solid, mp. 180-190°C, yield 28.7 g (93.1%). This product had very low solubility in various organic solvents, therefore the NMR spectrum data could not be obtained.

Durability Evaluation

All panels were cleaned with a methylene chloride rinse prior to treatment by immersing for one hour at room temperature into 1 millimolar solutions of the bis-functional species in water having dissolved therein one molecule equivalent of ammonium hydroxide. Following this, the panels were rinsed with water and immersed in a 2 millimolar solution of zinc acetate in water, at room temperature, for one hour.

The panels so treated were laminated with films of the TFE/HFP copolymer APA-II hereinabove described. Prior to lamination, the films were prepared from a 5% solution of the polymer in perfluorotetradecahydrophenanthrene by casting onto glass plates, followed by evaporation of the solvent. The resultant films, ca. 0.05 mm in thickness, were peeled from the plates and laminated to the aluminum panels at a temperature of 130°C. They were then placed side by side in a vacuum oven at 160°C, and the oven turned off to effect slow cooling.

After aging as indicated hereinbelow, the panels were cut into test plaques ca. 1" x 4" (2.54 cm x 10.16 cm). Edges were sealed with silicone caulk and a groove scribed according to the method of ASTM 1654-92.

A control sample was also prepared by laminating the APA-II film to the cleaned aluminum plate without having further treated the metal plate prior to lamination.

The panels were then immersed in baths of compositions indicated in the specific examples hereinbelow for the periods indicated therein. Upon removal, the extent of delamination of the metal/polymer interface was evaluated as hereinabove described

Table 1 describes the preparation of the metal panels. The "carbon number" denotes the number of carbon atoms in the aliphatic or fluoroaliphatic chain hereinabove described.

TABLE 1

| Aluminum Panel Treatments: Aqueous NH$_4$OH 23°C Zinc Acetate/ethanol Post-Treatment | | |
|---|---|---|
| Specimen # | Carbon Number | |
| A17 | 4 | Fluorophosphate |
| A18 | 8 | Fluorophosphate |
| A19 | 12 | Fluorophosphate |
| A20 | 12 | DBPA |

EXAMPLES 1-3 AND COMPARATIVE EXAMPLES 1 et 2

The panels were aged for one week at room temperature prior to edge sealing. They were then immersed in 1.1 molar aqueous solution of HCl at room temperature for a total of 14 hours. Results are shown in Table 2

Table 2:

| Aluminum Panels in Aqueous HCl | | |
|---|---|---|
| | Specimen | Delaminated area (in$^2$) |
| | | (cm$^2$) |
| Comparative Example 1 | Control | 0.48 (3.10) |
| Comparative Example 2 | A17 | 0.64 (4.13) |
| Example 1 | A18 | 0.23 (1.48) |
| Example 2 | A19 | 0.20 (1.29) |
| Example 3 | A20 | 0.19 (1.23) |

EXAMPLES 4-6 AND COMPARATIVE EXAMPLES 3 et 4

The panels were aged four weeks at room temperature prior to edge sealing. They were then immersed in a 0.0001 gm/gm solution of NaCl in water for one day. With no evidence of delamination, the concentration was increased to 0.001 gm/gm NaCl/H2O. After five more days of exposure with no delamination noted, the bath temperature was increased to 100°C. Results in Table 3 were obtained after two days of the latter exposure.

Table 3:

| Aluminum Panels in Aqueous NaCl | | |
|---|---|---|
| | Specimen | Delaminated area (in$^2$) |
| | | (cm$^2$) |
| Comparative Example 3 | Control | 0.3 (1.94) |
| Comparative Example 4 | A17 | 1.0 (6.45) |
| Example 4 | A18 | 0.1 (0.65) |
| Example 5 | A19 | 0.011 (0.07) |
| Example 6 | A20 | 0.0095 (0.06) |

**Claims**

1. A process for producing a derivatized metal surface, comprising: contacting a metal surface with an $\alpha$-$\omega$ difunctional substantially linear fluoroaliphatic acid, or a salt thereof represented by the formula $\alpha$-R-$\omega$
   wherein
   $\alpha$ is a functional group selected from the group consisting of radicals of oxyacids of phosphorous, carbon and salts of a counterion or cation thereof;
   $\omega$ is a functional group selected, independently of $\alpha$, from the group consisting of radicals of oxyacids of phosphorous, carbon and salts of a counterion or cation thereof; primary, secondary, tertiary or quaternary amines and the salts thereof; phenol; oxamic acid; amino acid; and carbon and sulfur zwitterion; and
   R is an $\alpha$-$\omega$ bidentate substantially unbranched fluoroaliphatic organic radical having 8 to less than 30 carbons in a linear chain between the radical ends wherein less than 50% of the carbon atoms in the chain are replaced by oxygen, nitrogen, or sulfur, to produce a first derivatized metal surface.

2. The process of claim 1 wherein the salt is univalent.

3. The process of claim 1 wherein the $\alpha$-$\omega$ difunctional substantially linear fluoroaliphatic acid or salt thereof is a bis-oxyacid of phosphorus or a univalent salt thereof.

4. The process of claim 3 wherein the bis-oxyacid of phosphorus or univalent salt thereof is of the formula $(CF_2)_n$-$((CH_2)_m OP(O)(OH)_2)_2$ wherein n is 6-10 and m is 1 or 2.

5. The process of claim 3 further comprising:

   contacting said first derivatized metal surface with a solution comprising a multivalent metal salt wherein the metal of the salt is selected from the group consisting of alkaline earth metals, transition metals, metals from groups IVA, VA, VIA of the periodic table, and complex ions and is in solution with the solvent which is a liquid or liquid mixture having a pKa value higher than that of the $\alpha$-$\omega$ difunctional substantially linear fluoroaliphatic acid or salt thereof to produce a second derivatized metal surface, wherein the metal of the metal surface is selected from iron, chromium, aluminium, copper, nickel, zinc, titanium, tin, tantalum, steel, stainless steel, brass, inconel and phosphated metals.

6. The process of claim 1 wherein the metal is selected from the group consisting of iron, chromium, aluminium, copper, nickel, zinc, titanium, tin, tantalum, steel, stainless steel, brass, inconel, and phosphated metals.

7. The process of claim 1 further comprising contacting said first derivatized metal surface with a liquid comprising a polymer having oxyacid functionality or salt thereof, amine functionality, anhydride functionality, or a polyimide to produce a third derivatized metal surface.

8. The process of claim 5 further comprising contacting said second derivatized metal surface with a polymer having oxyacid functionality or salt thereof, amine functionality, anhydride functionality, or a polyimide to produce a third derivatized metal surface.

9. The process of claims 7 or 8 wherein the metal is tantalum and the polymer is a polyimide.

10. The process of claim 1 further comprising, contacting said first derivatized metal surface with a non-polymeric molecular species having oxyacid functionality or salt thereof, amine functionality, or phenolic functionality to produce a fourth derivatized metal surface.

11. The process of claim 5 further comprising contacting said second derivatized metal surface with a non-polymeric molecular species having oxyacid functionality or salt thereof, amine functionality or phenolic functionality to produce a fourth derivatized metal surface.

12. The process of claim 11 wherein the $\alpha$-$\omega$ difunctional substantially linear fluoroaliphatic acid or salt thereof is a bisphosphonic acid or univalent salt thereof.

13. The process of claim 11 wherein the $\alpha$-$\omega$ difunctional substantially linear fluoroaliphatic acid or salt thereof is a fluoroaliphatic acid of the formula $(CF_2)_n\text{-}((CH_2)_mOP(O)(OH)_2)_2$ wherein n is 6-10 and m is 1 or 2.

14. A layered structure comprising:

   a first layer comprising a substrate having a surface, said substrate comprising a metal and a plurality of cations thereof on the surface; and
   a second layer comprising an $\alpha$-$\omega$ difunctional substantially linear fluoroaliphatic bidentate radical having 8 to less than 30 carbons in a linear chain between the radical ends wherein less than 50% of the carbon atoms in the chain are replaced by oxygen, nitrogen or sulfur, the radical having a first end and a second end, said first end being bonded to an anion of an oxy-acid of phosphorous or carbon, said anion being ionically bonded to the metal cations on the surface of said substrate, and said second end being bonded to a functional group selected from the group consisting of radicals of oxyacids of phosphorous, carbon, and salts of a counterion or cation thereof; primary, secondary, tertiary or quaternary amines and salts thereof; phenol; oxamic acid; amino acid; and carbon and sulfur zwitterion.

15. The layered structure of claim 14 further comprising:

   a multivalent metallic salt derivative ionically bonded to said functional group or to a derivative of said functional group, wherein the metal of the substrate is selected from iron, chromium, aluminium, copper, nickel, zinc, titanium, tin, tantalum, steel, stainless steel, brass, inconel and phosphated metal.

16. The layered structure of claim 14 further comprising an organic species complexed with or ionically bound to said functional group or to a derivative of said functional group.

17. The layered structure of claim 15 further comprising an organic species complexed with or ionically bound to said multivalent metallic salt derivative or to an ion of said multivalent metallic salt derivative.

18. The layered structure of claim 15 wherein the first end is bonded to a first phosphonate radical and the second end is bonded to a second phosphonate radical, said first and second phosphonate radicals being the same or different.

19. The layered structure of claims 14 or 15 wherein the first end is bonded to an anion of an oxyacid of phosphorus and the second end is bonded to a functional group of a radical of oxyacid of phosphorus, said first and second oxyacids being the same or different.

20. The layered structure of claims 16 or 17 wherein the organic species is a polymeric species, said polymeric species forming a third layer.

21. The layered structure of claim 20 wherein the organic species is an acid anion of an acid-containing polymer.

22. The layered structure of claim 20 wherein the polymer is a polyimide and the metal is tantalum.

23. The layered structure of claims 16 or 17 wherein the organic species is a non-polymeric molecular species.

24. The process of claim 5 wherein the metal of the salt is selected from the group consisting of Zr, Zn, Pb, Al, Cr, Fe, Ni, Co, V, Sn, Os, Ce, Y, Yb, La, Mn, Mg, Cu and Ca and the solvent is water or ethanol.

**25.** The process of claim 24 wherein the solution is an aqueous solution of zinc acetate.

**Patentansprüche**

**1.** Verfahren zum Herstellen einer derivatisierten Metalloberfläche, umfassend: Kontaktieren einer Metalloberfläche mit einer $\alpha$-$\omega$-difunktionellen und im Wesentlichen linearen fluoraliphatischen Säure oder einem Salz davon, dargestellt durch die Formel $\alpha$-R-$\omega$, worin sind:

$\alpha$ eine funktionelle Gruppe, ausgewählt aus der Gruppe, bestehend aus Resten von Oxysäuren des Phosphors, Kohlenstoffes und Salzen eines Gegenions oder Kations davon;

$\omega$ eine funktionelle Gruppe, unabhängig von $\alpha$ ausgewählt aus der Gruppe, bestehend aus Resten von Oxysäuren des Phosphors, Kohlenstoffes und Salzen eines Gegenions oder Kations davon; primären, sekundären, tertiären oder quaternären Aminen und den Salzen davon; Phenol; Oxaminsäure; Aminosäure und Kohlenstoff und Schwefel-Zwitterion; sowie

R ein $\alpha$-$\omega$-zweizähniger und im Wesentlichen unverzweigter, fluoraliphatischer organischer Rest mit 8 bis weniger als 30 Kohlenstoffatomen in einer unverzweigten Kette zwischen den Rest-Enden und worin weniger als 50% der Kohlenstoffatome in der Kette ersetzt sind durch Sauerstoff, Stickstoff oder Schwefel, um eine erste derivatisierte Metalloberfläche zu erzeugen.

**2.** Verfahren nach Anspruch 1, worin das Salz einwertig ist.

**3.** Verfahren nach Anspruch 1, worin die $\alpha$-$\omega$-difunktionelle und im Wesentlichen lineare, fluoraliphatische Säure oder ein Salz davon eine Bis-oxysäure des Phosphors oder ein einwertiges Salz davon ist.

**4.** Verfahren nach Anspruch 3, bei welchem die Bis-oxysäure des Phosphors oder ein einwertiges Salz davon die Formel hat: $(CF_2)_n$-$((CH_2)_m OP(O)(OH)_2)_2$, worin n 6 bis 10 sind und m 1 oder 2.

**5.** Verfahren nach Anspruch 3, ferner umfassend:

Kontaktieren der ersten derivatisierten Metalloberfläche mit einer Lösung, die ein mehrwertiges Metallsalz aufweist, worin das Metall des Salzes ausgewählt ist aus der Gruppe, bestehend aus Erdalkalimetallen, Übergangsmetallen, Metallen der Gruppen IVA, VA, VIA des Periodensystems der Elemente, und komplexe Ionen und sich mit dem Lösemittel in Lösung befindet, das eine Flüssigkeit oder flüssige Mischung mit einem pKa-Wert größer als derjenige der $\alpha$-$\omega$-difunktionellen und im Wesentlichen linearen fluoraliphatischen Säure oder des Salzes davon ist, um eine zweite derivatisierte Metalloberfläche zu erzeugen, worin das Metall der Metalloberfläche ausgewählt ist aus Eisen, Chrom, Aluminium, Kupfer, Nickel, Zink, Titan, Zinn, Tantal, Stahl, rostfreiem Stahl, Messing, Inconel und phosphatierten Metallen.

**6.** Verfahren nach Anspruch 1, bei welchem das Metall ausgewählt ist aus der Gruppe, bestehend aus Eisen, Chrom, Aluminium, Kupfer, Nickel, Zink, Titan, Zinn, Tantal, Stahl, rostfreiem Stahl, Messing, Inconel und phosphatierten Metallen.

**7.** Verfahren nach Anspruch 1, ferner umfassend das Kontaktieren der ersten derivatisierten Metalloberfläche mit einer Flüssigkeit, die ein Polymer aufweist, das eine Oxysäure-Funktionalität hat, oder ein Salz davon, Amin-Funktionalität, Anhydrid-Funktionalität, oder einem Polyimid, um eine dritte derivatisierte Metalloberfläche zu erzeugen.

**8.** Verfahren nach Anspruch 5, ferner umfassend das Kontaktieren der zweiten derivatisierten Metalloberfläche mit einem Polymer, das eine Oxysäure-Funktionalität hat oder ein Salz davon, Amin-Funktionalität, Anhydrid-Funktionalität, oder einem Polyimid, um eine dritte derivatisierte Metalloberfläche zu erzeugen.

**9.** Verfahren nach Anspruch 7 oder 8, bei welchem das Metall Tantal ist und das Polymer ein Polyimid ist.

**10.** Verfahren nach Anspruch 1, ferner umfassend das Kontaktieren der ersten derivatisierten Metalloberfläche mit einer nichtpolymeren molekularen Spezies, die eine Oxysäure-Funktionalität hat oder ein Salz davon, Amin-Funktionalität oder Phenol-Funktionalität, um eine vierte derivatisierte Metalloberfläche zu erzeugen.

**11.** Verfahren nach Anspruch 5, ferner umfassend das Kontaktieren der zweiten derivatisierten Metalloberfläche mit einer nichtpolymeren molekularen Spezies, die eine Oxysäure-Funktionalität hat oder ein Salz davon, Amin-Funktionalität oder Phenol-Funktionalität, um eine vierte derivatisierte Metalloberfläche zu erzeugen.

**12.** Verfahren nach Anspruch 11, bei welchem die $\alpha$-$\omega$-difunktionelle und im Wesentlichen lineare fluoraliphatische Säure oder ein Salz davon eine Diphosphonsäure oder einwertiges Salz davon ist.

**13.** Verfahren nach Anspruch 11, bei welchem die $\alpha$-$\omega$-difunktionelle und im Wesentlichen lineare fluoraliphatische Säure oder ein Salz davon eine fluoraliphatische Säure der Formel $(CF_2)_n$-$((CH_2)_m OP(O)(OH)_2)_2$ ist, worin n 6 bis 10 und m 1 oder 2 sind.

**14.** Schichtstruktur, aufweisend:

eine erste Lage, die ein Substrat mit einer Oberfläche aufweist, wobei das Substrat ein Metall und eine Mehrzahl von Kationen darauf auf der Oberfläche aufweist, und eine zweite Lage, die einen $\alpha$-$\omega$-difunktionellen und im Wesentlichen linearen fluoraliphatischen, zweizähnigen Rest aufweist, der 8 bis weniger als 30 Kohlenstoffatome in einer unverzweigten Kette zwischen den Restenden hat, worin weniger als 50% der Kohlenstoffatome in der Kette ersetzt sind durch Sauerstoff, Stickstoff und Schwefel, worin der Rest ein erstes Ende und ein zweites Ende hat, wobei das erste Ende an ein Anion einer Oxysäure des Phosphors oder Kohlenstoffs gebunden ist, wobei das Anion ionisch an den Metallkationen auf der Oberfläche des Substrats gebunden ist, und das zweite Ende an einer funktionellen Gruppe gebunden ist, ausgewählt aus der Gruppe, bestehend aus Resten von Oxysäuren des Phosphors, Kohlenstoffes und Salzen eines Gegenions oder Kations davon; primären, sekundären, tertiären oder quaternären Aminen und Salzen davon; Phenol; Oxaminsäure; Aminosäure; und Kohlenstoff und Schwefel-Zwitterionen.

**15.** Schichtstruktur nach Anspruch 14, ferner aufweisend:

ein mehrwertiges Metallsalz-Derivat, das ionisch an der funktionellen Gruppe gebunden ist oder an ein Derivat der funktionellen Gruppe, wobei das Metall des Substrats ausgewählt ist aus Eisen, Chrom, Aluminium, Kupfer, Nickel, Zink, Titan, Zinn, Tantal, Stahl, rostfreiem Stahl, Messing, Inconel und phosphatiertem Metall.

**16.** Schichtstruktur nach Anspruch 14, ferner aufweisend eine organische Spezies, die komplexiert ist mit oder ionisch gebunden ist an der funktionellen Gruppe oder einem Derivat der funktionellen Gruppe.

**17.** Schichtstruktur nach Anspruch 15, ferner aufweisend eine organische Spezies, die komplexiert ist mit oder ionisch gebunden an dem mehrwertigen Metallsalz-Derivat oder an einem Ion des mehrwertigen Metallsalz-Derivates.

**18.** Schichtstruktur nach Anspruch 15, wobei das erste Ende an einem ersten Phosphonat-Rest gebunden ist und das zweite Ende an einem Phosphonat-Rest gebunden ist, wobei die ersten und zweiten Phosphonat-Reste gleich oder verschieden sind.

**19.** Schichtstruktur nach Anspruch 14 oder 15, wobei das erste Ende an einem Anion einer Oxysäure des Phosphors gebunden ist und das zweite Ende an einer funktionellen Gruppe eines Restes der Oxysäure des Phosphors, wobei die erste und zweite Oxysäure gleich oder verschieden sind.

**20.** Schichtstruktur nach Anspruch 16 oder 17, wobei die organischen Spezies eine polymere Spezies ist und wobei die polymere Spezies eine dritte Lage erzeugt.

**21.** Schichtstruktur nach Anspruch 20, wobei die organischen Spezies ein Säureanion eines eine Säure enthaltenden Polymers ist.

**22.** Schichtstruktur nach Anspruch 20, wobei das Polymer ein Polyimid und das Metall Tantal sind.

**23.** Schichtstruktur nach Anspruch 16 oder 17, wobei die organische Spezies eine nichtpolymere molekulare Spezies ist.

**24.** Verfahren nach Anspruch 5, wobei das Metall des Salzes ausgewählt ist aus der Gruppe, bestehend aus Zr, Zn, Pb, Al, Cr, Fe, Ni, Co, V, Sn, Os, Ce, Y, Yb, La, Mn, Mg, Cu und Ca, und das Lösemittel Wasser oder Ethanol ist.

**25.** Verfahren nach Anspruch 24, wobei die Lösung eine wässrige Lösung von Zinkacetat ist.


**Revendications**

1. Procédé pour produire une surface métallique dérivatisée, comprenant: mettre en contact une surface métallique avec un acide fluoroaliphatique substantiellement linéaire bifonctionnel $\alpha$-$\omega$, ou un sel de celui-ci, représenté par la formule $\alpha$-R-$\omega$

   dans lequel

   $\alpha$ est un groupe fonctionnel choisi dans le groupe comprenant des radicaux d'oxydes acides de phosphore, de carbone et les sels d'un contre-ion ou cation de ceux-ci;

   $\omega$ est un groupe fonctionnel choisi, indépendamment d'$\alpha$, dans le groupe comprenant des radicaux d'oxydes acides de phosphore, de carbone et les sels d'un contre-ion ou cation de ceux-ci; des amines primaires, secondaires, tertiaires ou quaternaires et leurs sels; du phénol; de l'acide oxamique; un acide aminé; et un zwitterion de carbone et de souffre; et

   R est un radical organique fluoroaliphatique substantiellement sans embranchement bidentate $\alpha$-$\omega$, ayant de 8 à moins de 30 carbones dans une chaîne linéaire entre les extrémités du radical, dans lequel moins de 50% des atomes de carbone dans la chaîne sont remplacés par de l'oxygène, de l'azote, ou du souffre, pour produire une première surface métallique dérivatisée.

2. Procédé de la revendication 1 dans lequel le sel est univalent.

3. Procédé de la revendication 1 dans lequel l'acide fluoroaliphatique substantiellement linéaire bifonctionnel $\alpha$-$\omega$ ou son sel est un bis oxyde acide de phosphore ou son sel univalent.

4. Procédé de la revendication 3 dans lequel le bis oxyde acide de phosphore ou son sel univalent est de formule $(CF_2)_n\text{-}((CH_2)_mOP(O)(OH)_2)_2$ dans laquelle n varie de 6 à 10 et m est égal à 1 ou 2.

5. Procédé de la revendication 3 comprenant de plus:

   mettre en contact ladite première surface métallique dérivatisée avec une solution comprenant un sel métallique multivalent dans lequel le métal du sel est choisi dans le groupe comprenant des métaux de terre alcaline, des métaux de transition, des métaux des groupes IVA, VA et VIA du tableau périodique, et des ions complexes et est en solution avec un solvant qui est un liquide ou un mélange liquide ayant une valeur de pKa plus élevée que celle de l'acide fluoroaliphatique substantiellement linéaire bifonctionnel $\alpha$-$\omega$ ou son sel, pour produire une seconde surface métallique dérivatisée, dans laquelle le métal de la surface métallique est choisi parmi du fer, du chrome, de l'aluminium, du cuivre, du nickel, du zinc, du titane, de l'étain, du tantale, de l'acier, de l'acier inoxydable, du laiton, de l'inconel et des métaux phosphatés.

6. Procédé de la revendication 1 dans lequel le métal est choisi dans le groupe comprenant du fer, du chrome, de l'aluminium, du cuivre, du nickel, du zinc, du titane, de l'étain, du tantale, de l'acier, de l'acier inoxydable, du laiton, de l'inconel, et des métaux phosphatés.

7. Procédé de la revendication 1 comprenant de plus mettre en contact ladite première surface métallique dérivatisée avec un liquide comprenant un polymère ayant une fonctionnalité oxyde acide ou un sel de cela, une fonctionnalité amine, une fonctionnalité anhydride, ou un polyimide pour produire une troisième surface métallique dérivatisée.

8. Procédé de la revendication 5 comprenant de plus mettre en contact ladite seconde surface métallique dérivatisée avec un polymère ayant une fonctionnalité oxyde acide ou un sel de cela, une fonctionnalité amine, une fonctionnalité anhydride, ou un polyimide pour produire une troisième surface métallique dérivatisée.

9. Procédé des revendications 7 ou 8 dans lequel le métal est du tantale et le polymère est un polyimide.

10. Procédé de la revendication 1 comprenant de plus mettre en contact ladite première surface métallique dérivatisée avec une espèce moléculaire non-polymère ayant une fonctionnalité oxyde acide ou un sel de cela, une fonctionnalité amine, une fonctionnalité phénolique, pour produire une quatrième surface métallique dérivatisée.

11. Procédé de la revendication 5 comprenant de plus mettre en contact ladite seconde surface métallique dérivatisée avec une espèce moléculaire non-polymère ayant une fonctionnalité oxyde acide ou un sel de cela, une fonctionnalité amine ou une fonctionnalité phénolique, pour produire une quatrième surface métallique dérivatisée.

**12.** Procédé de la revendication 11 dans lequel l'acide fluoroaliphatique substantiellement linéaire bifonctionnel α-ω ou son sel est un acide diphosphonique ou son sel univalent.

**13.** Procédé de la revendication 11 dans lequel l'acide fluoroaliphatique substantiellement linéaire bifonctionnel α-ω ou son sel est un acide fluoroaliphatique de formule $(CF_2)_n$-$((CH_2)_mOP(O)(OH)_2)_2$ dans laquelle n varie de 6 à 10 est m est égal à 1 ou 2.

**14.** Structure stratifiée comprenant:

une première couche comprenant un substrat ayant une surface, ledit substrat comprenant un métal et une pluralité de cations de celui-ci sur la surface; et
une seconde couche comprenant un radical bidentate fluoroaliphatique substantiellement linéaire bifonctionnel α-ω, ayant de 8 à moins de 30 carbones dans une chaîne linéaire entre les extrémités du radical, dans lequel moins de 50% des atomes de carbone dans la chaîne sont remplacés par de l'oxygène, de l'azote ou du souffre, le radical ayant une première extrémité et une seconde extrémité, ladite première extrémité étant liée à un anion d'un oxyde acide de phosphore ou de carbone, ledit anion étant lié ioniquement aux cations métalliques sur la surface dudit substrat, et ladite seconde extrémité étant liée à un groupe fonctionnel choisi dans le groupe comprenant des radicaux d'oxydes acides de phosphore, de carbone et les sels d'un contre-ion ou cation de ceux-ci; des amines primaires, secondaires, tertiaires ou quaternaires et leurs sels; du phénol, de l'acide oxamique; un acide aminé; et un zwitterion de carbone et de souffre.

**15.** Structure stratifiée de la revendication 14 comprenant de plus:

un dérivé de sel métallique multivalent lié ioniquement audit groupe fonctionnel ou à un dérivé dudit groupe fonctionnel, dans lequel le métal du substrat est choisi parmi du fer, du chrome, de l'aluminium, du cuivre, du nickel, du zinc, du titane, de l'étain, du tantale, de l'acier, de l'acier inoxydable, du laiton, de l'inconel, et des métaux phosphatés.

**16.** Structure stratifiée de la revendication 14 comprenant de plus une espèce organique complexée avec ou liée ioniquement audit groupe fonctionnel ou à un dérivé dudit groupe fonctionnel.

**17.** Structure stratifiée de la revendication 15 comprenant de plus une espèce organique complexée avec ou liée ioniquement audit dérivé de sel métallique multivalent ou à un ion dudit dérivé de sel métallique multivalent.

**18.** Structure stratifiée de la revendication 15 dans laquelle la première extrémité est liée à un premier radical phosphonate et la seconde extrémité est liée à un second radical phosphonate, lesdits premier et second radicaux phosphonates étant les mêmes ou étant différents.

**19.** Structure stratifiée des revendications 14 ou 15 dans laquelle la première extrémité est liée à un anion d'un oxyde acide de phosphore et la seconde extrémité est liée à un groupe fonctionnel d'un radical d'oxyde acide de phosphore, lesdits premier et second oxydes acides étant les mêmes ou étant différents.

**20.** Structure stratifiée des revendications 16 ou 17 dans laquelle l'espèce organique est une espèce polymère, ladite espèce polymère formant une troisième couche.

**21.** Structure stratifiée de la revendication 20 dans laquelle l'espèce organique est un anion d'acide d'un polymère contenant un acide.

**22.** Structure stratifiée de la revendication 20 dans laquelle le polymère est un polyimide et le métal est du tantale.

**23.** Structure stratifiée des revendications 16 ou 17 dans laquelle l'espèce organique est une espèce moléculaire non-polymère.

**24.** Procédé de la revendication 5 dans lequel le métal du sel est choisi dans le groupe comprenant du Zr, Zn, Pb, Al, Cr, Fe, Ni, Co, V, Sn, Os, Ce, Y, Yb, La, Mn, Mg, Cu et Ca et le solvant est de l'eau ou de l'éthanol.

**25.** Procédé de la revendication 24 dans lequel la solution est une solution aqueuse d'acétate de zinc.

$$H_2O_3P\text{-}R\text{-}PO_3H_2$$

$$^{2-}O_3P\text{-}R\text{-}PO_3H_2$$
$$^{2-}O_3P\text{-}R\text{-}PO_3H_2$$
$$^{2-}O_3P\text{-}R\text{-}PO_3H_2$$

FIG.1

$$^{2-}O_3P\text{-}R\text{-}PO_3H_2$$
$$^{2-}O_3P\text{-}R\text{-}PO_3H_2$$

$$Zn(Ac)_2$$

FIG.2

EP 1 133 584 B1

FIG.3

FIG.4